# EUROPÄISCHE PATENTSCHRIFT

(11) **EP 3 175 949 B1**
(45) Veröffentlichungstag und Bekanntmachung des Hinweises auf die Patenterteilung: **28.02.2018**
(21) Anmeldenummer: 16194951.6
(22) Anmeldetag: 21.10.2016
(51) Int. Cl.: B23C 1/00, B23C 1/14

(54) **WERKZEUGMASCHINE**
MACHINE TOOL
MACHINE-OUTIL

(30) Priorität: 04.11.2015 DE 102015221599
(43) Veröffentlichungstag der Anmeldung: 07.06.2017
(73) Patentinhaber: Dr. Johannes Heidenhain GmbH, 83301 Traunreut (DE)
(72) Erfinder: MEISSNER, Markus, 83236 Übersee (DE)

(56) Entgegenhaltungen:
- EP-A2- 0 712 683
- WO-A1-01/38828
- JP-A- 2007 044 802
- US-A1- 2003 120 377

## Beschreibung

### GEBIET DER TECHNIK

Die vorliegende Erfindung betrifft eine Werkzeugmaschine gemäß dem Oberbegriff von Anspruch 1.

### STAND DER TECHNIK

Eine gattungsgemäße Werkzeugmaschine ist beispielsweise aus der EP 0 712 683 A2 bekannt. Diese ist zur spanenden 5-Achs-Bearbeitung von Werkstücken geeignet und weist einen stationären Maschinenrahmen sowie einen Bearbeitungskopf auf, der entlang dreier orthogonal zueinander orientierter Translationsachsen relativ zum Maschinenrahmen positionierbar ist. Der Bearbeitungskopf umfasst ein motorisch angetriebenes Werkzeug, beispielsweise ein Fräs-Werkzeug. Ferner ist in der gattungsgemäßen Maschine eine Schwenkeinheit vorgesehen, die um eine horizontale Schwenkachse relativ zum Maschinenrahmen schwenkbar ist; die Schwenkeinheit umfasst zudem eine Werkstück-Positioniereinrichtung, über die ein Werkstück um eine senkrecht zur Schwenkachse orientierte Drehachse drehbar ist.

Werkzeugmaschinen dieser Bauart, die mitunter auch als sog. modifizierte Gantry-Bauweise bezeichnet wird, bieten unter definierten Bedingungen bereits eine gute Genauigkeit in Bezug auf die am Werkstück erreichbaren Form- und Lagetoleranzen. Unvermeidbare mechanische und/oder thermische Belastungen der Werkzeugmaschine können jedoch zu Verformungen an einzelnen Komponenten führen, die über die in der Maschine integrierten Positionsmesssysteme nicht vollständig erfassbar und damit auch nicht vollständig kompensierbar sind. Als Folge resultieren Fehler im zu bearbeitenden Werkstück, d.h. dieses weist nicht die gewünschten Dimensionen auf bzw. die geforderten Form- und Lagetoleranzen des Werkstücks werden nicht eingehalten.

Für Werkzeugmaschinen einer anderen Bauweise ist aus der DE 10 2011 079 792 A1 bekannt, zur Lösung der vorstehend diskutierten Probleme einen Messrahmen in die Maschine zu integrieren, der möglichst weder durch mechanische Belastung noch durch thermische Einflüsse deformierbar ist. Der rechteckförmig Messrahmen ist hierbei in den stationären Maschinenteil integriert und besteht aus einem Material mit einem kleinen thermischen Ausdehnungskoeffizienten. Am Messrahmen sind Komponenten von Positionsmesssystemen angeordnet, über die eine Bestimmung der Position des Bearbeitungs- bzw. Spindelkopfes zum Messrahmen einerseits und eine Bestimmung der Position des Werkstücks zum Messrahmen andererseits erfolgt. Damit lässt sich die Positionsbestimmung in Bezug auf die Werkzeug-und die Werkstückposition von mechanischen und thermischen Einflüssen bei der vorgesehenen Maschinenkinematik entkoppeln und die oben erwähnten Probleme bezüglich Maschinengenauigkeit minimieren. Aufgrund der an der Unterseite des Werkstücktisches angeordneten Skala eines Positionsmesssystems, die lediglich eine begrenzte räumliche Ausdehnung aufweist, ist der über dieses Positionsmesssystem erfassbare Verfahrbereich des Tisches limitiert. Desweiteren finden sich in der genannten Druckschrift keine Hinweise dahingehend, wie sich ein geeignet ausgebildeter Messrahmen am zweckmäßigsten in eine Werkzeugmaschine der eingangs diskutierten Bauweise integrieren lässt, die eine Relativpositionierung von Werkstück und Werkzeug in fünf räumlichen Freiheitsgraden ermöglicht.

### ZUSAMMENFASSUNG DER ERFINDUNG

Der vorliegenden Erfindung liegt die Aufgabe zugrunde, eine Werkzeugmaschine der eingangs genannten Art anzugeben, in der die vorgenannten Fehler bei der Positionsbestimmung minimiert werden und insbesondere eine möglichst präzise Bestimmung der Position des Werkstücks relativ zum Werkzeug gewährleistet ist.

Diese Aufgabe wird erfindungsgemäß durch eine Werkzeugmaschine mit den Merkmalen des Anspruchs 1 gelöst.

Vorteilhafte Ausführungen der erfindungsgemäßen Werkzeugmaschine ergeben sich aus den Maßnahmen, die in den abhängigen Ansprüchen aufgeführt sind.

Die erfindungsgemäße Werkzeugmaschine umfasst einen stationären Maschinenrahmen sowie einen Bearbeitungskopf, der entlang dreier orthogonal zueinander orientierter Translationsachsen relativ zum Maschinenrahmen positionierbar ist und ein motorisch angetriebenes Werkzeug aufweist. Ferner ist eine Schwenkeinheit vorgesehen, die um eine horizontale Schwenkachse relativ zum Maschinenrahmen schwenkbar ist und eine Werkstück-Positioniereinrichtung umfasst, über die ein Werkstück um eine senkrecht zur Schwenkachse orientierte Drehachse drehbar ist. Der Schwenkeinheit ist ein Messrahmen zugeordnet, der mit der Schwenkeinheit verschwenkbar sowie thermisch und/oder mechanisch entkoppelt von der Schwenkeinheit ausgebildet ist und an dem Komponenten eines ersten und zweiten Positionsmesssystems angeordnet sind. Dabei sind am Bearbeitungskopf weitere Komponenten des ersten Positionsmesssystems und an der Werkstück-Positioniereinrichtung weitere Komponenten des zweiten Positionsmesssystems angeordnet. Über das erste Positionsmesssystem erfolgt eine Bestimmung der räumlichen Position des Bearbeitungskopfes in Bezug auf den Messrahmen und über das zweite Positionsmesssystem eine Bestimmung der räumlichen Position der Werkstück-Positioniereinrichtung in Bezug auf den Messrahmen.

Vorzugsweise ist der Messrahmen über mehrere Flexelemente verbunden in der Schwenkeinheit integriert angeordnet.

Mit Vorteil ist der Messrahmen derart ausgebildet, dass sich die Pose der beiden Positionsmesssysteme zueinander während des Betriebs der Werkzeugmaschine nicht ändert.

Es ist möglich, mindestens einen Teil des Messrahmens L-förmig auszubilden, wobei sich ein erster Schenkel des Messrahmens parallel zur Schwenkachse und ein zweiter Schenkel des Messrahmens parallel zur Drehachse erstreckt.

Desweiteren ist vorteilhaft, wenn der Messrahmen derart ausgebildet ist, dass dessen thermischer Nullpunkt auf der Drehachse der Werkstück-Positioniereinrichtung liegt.

Es kann vorgesehen werden, dass das zweite Positionsmesssystem als Komponenten eine trommelförmig ausgebildete Maßverkörperung sowie mindestens drei Abtastköpfe zur Abtastung der Maßverkörperung umfasst, wobei
- die Maßverkörperung an der Werkstück-Positioniereinrichtung angeordnet ist und die Trommel-Längsachse mit der Drehachse der Werkstück-Positioniereinrichtung zusammenfällt und wobei
- die Abtastköpfe um den Trommelumfang verteilt am Messrahmen angeordnet sind.

Hierbei kann die Maßverkörperung als Auflicht-Maßverkörperung ausgebildet werden, die in radialer und axialer Richtung jeweils alternierend ausgebildete Teilungsbereiche mit unterschiedlichen optischen Eigenschaften umfasst; die Abtastköpfe sind zur optischen Abtastung der Maßverkörperung ausgebildet und umfassen jeweils mindestens eine Lichtquelle sowie eine Detektorein richtung.

Im Hinblick auf das erste Positionsmesssystem kann vorgesehen werden, dass dieses als Komponenten mindestens eine optische Sendeeinheit und eine optische Empfangseinheit umfasst, wobei entweder
- die Sendeeinheit am Bearbeitungskopf und die Empfangseinheit am Messrahmen angeordnet ist oder
- die Sendeeinheit am Messrahmen und die Empfangseinheit am Bearbeitungskopf angeordnet ist oder
- die Sendeeinheit und die Empfangseinheit am Messrahmen angeordnet sind und am Bearbeitungskopf eine Reflektoreinheit angeordnet ist oder
- die Sendeeinheit und die Empfangseinheit am Bearbeitungskopf angeordnet sind und am Messrahmen eine Reflektoreinheit angeordnet ist.

Dabei können zwischen dem Bearbeitungskopf und dem Messrahmen Abschirmelemente angeordnet sein, die zwischen Bearbeitungskopf und Messrahmen propagierende Strahlenbündel des ersten Positionsmesssystems abschirmen.

Desweiteren ist möglich, dass der Bearbeitungskopf mindestens einen Positionssensor aufweist, über den die Position einer Motorwelle, die das Werkzeug antreibt, relativ zu einem Gehäuse des Bearbeitungskopfes bestimmbar ist, an dem die Komponenten des ersten Positionsmesssystems angeordnet sind.

In einer möglichen Ausführungsform umfasst die Sendeeinheit mindestens drei Lichtquellen, die in fester Relativanordnung zueinander angeordnet und über eine Steuer- und Auswerteeinrichtung zeitlich selektiv aktivierbar sind.

Desweiteren kann die Empfangseinheit mindestens eine optoelektronische Detektoranordnung sowie mindestens ein der Detektoranordnung vorgeordnetes Abtastgitter umfassen.

Mit Vorteil ist die Steuer- und Auswerteeinrichtung dazu eingerichtet und ausgebildet, aus der Lage eines auf der Detektoranordnung resultierenden Streifenmusters die Winkellage der aktivierten Lichtquelle relativ zur Detektoranordnung zu bestimmen, so dass nach der sequentiellen Aktivierung der mindestens drei Lichtquellen die räumliche Position des Werkzeugs bestimmbar ist.

Alternativ hierzu kann das erste Positionsmesssystem als aktiv oder passiv nachgeführtes Interferometer ausgebildet sein, dessen Sende- und Empfangseinheit am Messrahmen angeordnet sind, während am Bearbeitungskopf eine Reflektoreinheit angeordnet ist, wobei
- die Reflektoreinheit mindestens einen Retroreflektor umfasst und wobei
- die Sendeeinheit einen Nachführmechanismus für mindestens sechs Messstrahlenbündel umfasst, mit dem diese dem Retroreflektor nachführbar sind.

Hierbei kann der Retroreflektor als Messreflektor fungieren und über das nachgeführte Interferometer ein Abstand zwischen dem Messreflektor und einem stationären Referenzreflektor messbar sein, wobei der Messreflektor und der Referenzreflektor jeweils als Kugel ausgebildet sind.

Über die erfindungsgemäßen Maßnahmen ist in der entsprechenden Werkzeugmaschine nunmehr eine hochgenaue Bestimmung der Relativposition von Werkzeug und Werkstück sichergestellt, was eine deutlich höhere Maschinengenauigkeit und damit eine optimierte Werkstückbearbeitung zur Folge hat. Der hierzu vorgesehene Messrahmen in der Schwenkeinheit gewährleistet insbesondere einen sehr kurzen Messzirkel. Dies bedeutet, dass die Positionsbestimmung so direkt wie möglich zwischen Werkstück und Werkzeug erfolgt. Umwege bei der relativen Positionsbestimmung von Werkstück und Werkzeug über weitere Bauteile können vermieden werden, so dass auf diese Art und Weise Fehler bei der Positionsbestimmung zuverlässig minimierbar sind, die durch thermische und/oder mechanische Belastungen der Werkzeugmaschine resultieren.

Verformungen der Werkzeugmaschine, die durch derartige Einflüsse resultieren, gehen nun nicht mehr in die Bestimmung der Relativpositionen von Werkzeug und Werkstück ein, da der Messrahmen in der Schwenkeinheit thermisch und/oder mechanisch von der Maschine entkoppelt ausgebildet ist.

Weitere Einzelheiten und Vorteile der vorliegenden Erfindung seien anhand der nachfolgenden Beschreibung eines Ausführungsbeispiels der erfindungsgemäßen Vorrichtung in Verbindung mit den Figuren erläutert.

### KURZE BESCHREIBUNG DER ZEICHNUNGEN

Es zeigt
- Figur 1: eine schematisierte perspektivische Teil-Darstellung eines Ausführungsbeispiels der erfindungsgemäßen Werkzeugmaschine;
- Figur 2: eine Schnittansicht der Schwenkeinheit aus der Werkzeugmaschine gemäß Figur 1;
- Figur 3: eine Draufsicht auf die Schwenkeinheit der Werkzeugmaschine gemäß Figur 1;
- Figur 4a: eine schematisierte Darstellung einer möglichen Ausführungsform des ersten Positionsmesssystems;
- Figur 4b: eine schematisierte Darstellung einer möglichen Ausführungsform des zweiten Positionsmesssystems.

### BESCHREIBUNG DER AUSFÜHRUNGSFORMEN

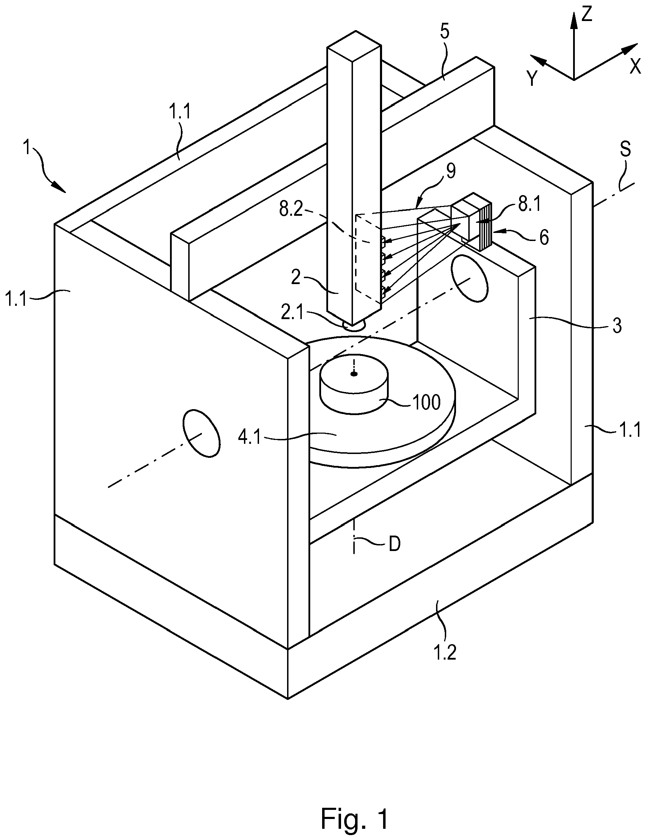

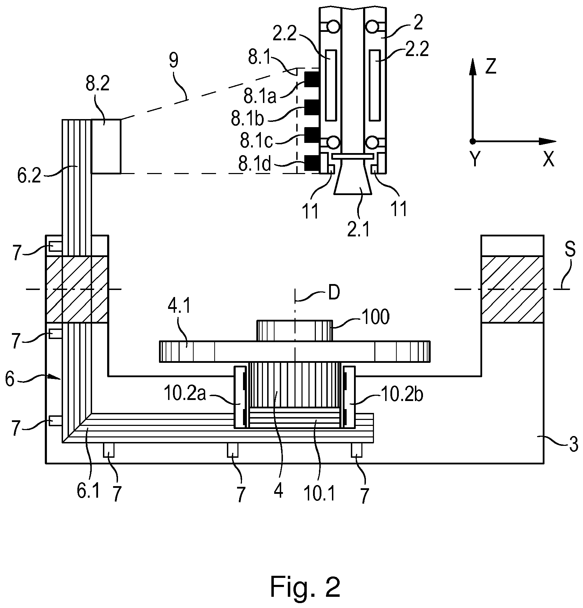

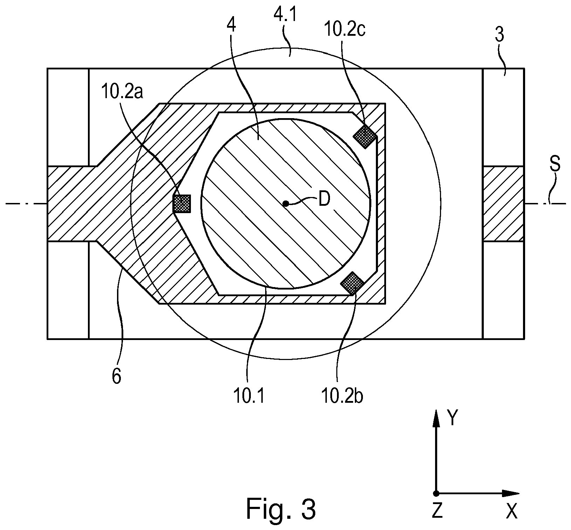

Ein Ausführungsbeispiel der erfindungsgemäßen Werkzeugmaschine ist in Figur 1 in stark schematisierter Form in einer perspektivischen Teil-Ansicht gezeigt; die Figuren 2 und 3 zeigen eine seitliche Schnittansicht sowie eine Draufsicht auf die Schwenkeinheit der Werkzeugmaschine aus Figur 1.

Die erfindungsgemäße Werkzeugmaschine weist einen stationären Maschinenrahmen 1 auf, gegenüber dem ein Bearbeitungskopf 2 in Form einer Werkzeugspindel entlang dreier orthogonal zueinander orientierter Translationsachsen x, y, z relativ positionierbar ist. Vom Maschinenrahmen 1 sind in der Darstellung der Figur 1 dabei lediglich ein unterer Basisbereich 1.2 sowie drei sich nach oben erstreckende Seitenwandungen 1.1 erkennbar. Zwischen den Seitenwandungen 1.1 befindet sich der eigentliche Arbeitsbereich der Werkzeugmaschine, in dem die spanende Bearbeitung eines Werkstücks 100 erfolgt. Der Bearbeitungskopf 2 umfasst hierzu ein Werkzeug 2.1, beispielsweise ein Fräswerkzeug, das an einem Ende einer rotierenden Motorwelle angeordnet ist, welche über einen geeigneten Antrieb 2.2 motorisch angetrieben wird, wie dies aus Figur 2 ersichtlich ist.

Zur Realisierung der Bewegung des Bearbeitungskopfes 2 entlang einer vertikalen Translationsachse z und einer ersten horizontalen Translationsachse x ist vorgesehen, den Bearbeitungskopf 2 über geeignete - nicht dargestellte - Längsführungen horizontal in x-Richtung und vertikal in z-Richtung positionierbar an einem Querträger 5 anzuordnen, der sich entlang der angegebenen x-Achse erstreckt. Die Bewegung des Bearbeitungskopfes 2 entlang einer zweiten horizontalen Translationsachse y erfolgt, indem der Querträger 5 über - ebenfalls nicht gezeigte - Längsführungen beweglich entlang der y-Richtung am Maschinenrahmen 1 bzw. an den zwei gegenüberliegenden Seitenwandungen 1.1 angeordnet wird.

Desweiteren ist in der erfindungsgemäßen Werkzeugmaschine eine Schwenkeinheit 3 vorgesehen, welche um eine horizontale Schwenkachse S relativ zum Maschinenrahmen 1 schwenkbar ist; die Schwenkachse S ist hierbei parallel zur ersten horizontalen Translationsachse x orientiert. Nicht in den Figuren gezeigt sind die in den Seitenwandungen 1.1 des Maschinenrahmens 1 angeordneten Lager, in denen die Schwenkeinheit 3 mittels eines nicht gezeigten Antriebs motorisch schwenkbar um die Schwenkachse S angeordnet ist.

Die Schwenkeinheit 3 umfasst ferner eine Werkstück-Positioniereinrichtung 4, ausgebildet als motorisch angetriebener Rundtisch, über die ein Werkstück 100 um eine senkrecht zur Schwenkachse S orientierte Drehachse D drehbar ist. Das Werkstück 100 wird hierbei mittels üblicher - in den Figuren nicht dargestellter - Spannmittel auf einem Tisch 4.1 der Werkstück-Positioniereinrichtung 4 befestigt. Die komplette Einheit aus Schwenkeinheit 3 und Werkstück-Positioniereinrichtung 4 wird in der Praxis auch als sog. NC-Schwenkrundtisch bezeichnet.

Erfindungsgemäß ist nunmehr vorgesehen, der Schwenkeinheit 3 einen Messrahmen 6 zuzuordnen bzw. darin zu integrieren, wie dies insbesondere aus der schematisierten Schnitt-Darstellung der Schwenkeinheit 3 in Figur 2 ersichtlich ist. Aufgrund einer derartigen Zuordnung des Messrahmens 6 zur Schwenkeinheit 3 ist dieser somit zusammen mit der Schwenkeinheit 3 um die Schwenkachse S verschwenkbar. Desweiteren ist der Messrahmen 6 in diesem Ausführungsbeispiel thermisch und mechanisch von der Schwenkeinheit 3 entkoppelt ausgebildet. Dies bedeutet, dass der Messrahmen 6 möglichst nicht durch Temperaturschwankungen und in der Maschine auftretende Bearbeitungskräfte verformt wird, sondern seine Soll-Geometrie auch im spanenden Betrieb stets beibehält. Zu Details einer entsprechenden Ausgestaltung des Messrahmens 6 sei auf die nachfolgende Beschreibung verwiesen.

Entscheidend für die vorliegende Erfindung ist nunmehr, dass über ein erstes Positionsmesssystem einerseits eine Bestimmung der räumlichen Position des Bearbeitungskopfes 2 und damit des Werkzeugs 2.1 in Bezug auf den Messrahmen 6 erfolgt und über ein zweites Positionsmesssystem andererseits eine Bestimmung der räumlichen Position der Werkstück-Positioniereinrichtung 4 und damit des Werkstücks 100 in Bezug auf den Messrahmen 6 erfolgt. Zu diesem Zweck sind zum einen bestimmte Komponenten des ersten und zweiten Positionsmesssystems am Messrahmen 6 angeordnet, zum anderen sind weitere Komponenten des ersten und zweiten Positionsmesssystems am Bearbeitungskopf 2 sowie an der Werkstück-Positioniereinrichtung 4 angeordnet. Auch hinsichtlich der möglichen Ausbildung des ersten und zweiten Positionsmesssystems sowie Details derselbigen sei auf die weitere Beschreibung verwiesen.

Über eine Bestimmung der räumlichen Position des Bearbeitungskopfes 2 bzw. der Werkstück-Positioniereinrichtung 4 relativ zum Messrahmen 6 resultiert somit ein kurzgeschlossener Messzirkel in Bezug auf die Bestimmung der Relativposition von Werkzeug 2.1 und Werkstück 100. Die eingangs diskutierten thermischen und/oder mechanischen Einflüsse auf die Positionsbestimmung können auf diese Art und Weise erheblich minimiert werden, es ergibt sich eine deutlich erhöhte Maschinengenauigkeit und damit eine verbesserte Werkstück-Qualität.

Der Messrahmen 6 ist im vorliegenden Ausführungsbeispiel L-förmig ausgebildet und besitzt einen ersten Schenkel 6.1, der sich beginnend von der zentralen Drehachse D nach außen erstreckt und parallel zur Schwenkachse S verläuft. Senkrecht orientiert zum ersten Schenkel 6.1 ist ein zweiter Schenkel 6.2 des Messrahmens 6 vorgesehen, der sich gemäß Figur 2 vom äußeren Ende des ersten Schenkels 6.1 senkrecht nach oben und damit parallel zur Drehachse D erstreckt.

Im dargestellten Ausführungsbeispiel ist der Messrahmen 6 sowohl thermisch als auch mechanisch entkoppelt von der Schwenkeinheit 3 sowie möglichst steif ausgebildet. Darüber wird sichergestellt, dass keine Temperatureinflüsse als auch mechanische Belastungen vom Maschinenrahmen 1 her auf den Messrahmen 6 zur Einwirkung kommen und diesen ggf. verformen. Die gegenüber dem Messrahmen 6 erfolgende Positionsbestimmung von Werkstück 100 und Werkzeug 2.1 über die beiden Positionsmesssysteme ist in der erfindungsgemäßen Werkzeugmaschine damit unabhängig von diesen Einflüssen. Der Abstand der messrahmenseitigen Komponenten dieser Positionsmesssysteme wird weder durch thermische noch durch mechanische Einwirkungen verändert. Die Pose der beiden Positionsmesssysteme zueinander ändert sich aufgrund der Ausbildung des Messrahmens somit während des Betriebs der erfindungsgemäßen Werkzeugmaschine nicht.

Zur thermischen Entkopplung ist vorliegend vorgesehen, dass der Messrahmen 6 aus einem Material mit einem möglichst geringen thermischen Wärmeausdehnungskoeffizienten besteht. Geeignet hierfür sind z.B. Invar oder aber auch spezielle Karbon-Materialien mit sehr kleinen thermischen Wärmeausdehnungskoeffizienten. Alternativ zu einer derartigen Materialwahl kann in der vorliegenden zur thermischen Entkopplung des Messrahmens von der restlichen Werkzeugmaschine auch eine aktive thermische Kompensation realisiert werden, beispielsweise in Form eines Messrahmens 6 aus temperiertem Aluminium, wobei die Temperierung über eine geeignete Wasserkühlung des Aluminium-Materials erfolgt.

Im Hinblick auf die mechanische Entkopplung ist im dargestellten Ausführungsbeispiel vorgesehen, den Messrahmen 6 mittels mehrerer Flexelemente 7 in die Schwenkeinheit 3 zu integrieren; in Figur 2 sind eine Reihe derartiger Flexelemente 7 zwischen Messrahmen 6 und Schwenkeinheit 3 schematisiert angedeutet.

Als Flexelemente 7 kommen etwa sog. 1D-, 2D- oder 3D-Festkörpergelenke bzw. Kombinationen davon in Betracht, über die der Messrahmen 6 mit der Schwenkeinheit 3 verbunden wird. 1D-Festkörpergelenke können dabei aus mehreren elastischen Verbindungselementen zwischen dem Messrahmen 6 und der Schwenkeinheit 3 ausgebildet werden, welche eine begrenzte Relativauslenkung von Messrahmen 6 und Schwenkeinheit 3 entlang einer einzigen Bewegungsrichtung ermöglichen. 2D-Festkörpergelenke können zwei oder mehr hintereinandergeschaltete Zwischenelemente umfassen, die über mehrere elastischen Verbindungselemente miteinander als auch mit dem Messrahmen 6 sowie der Schwenkeinheit 3 verbunden sind; darüber ist eine begrenzte Relativauslenkung des Messrahmens 6 und der Schwenkeinheit 3 entlang zweier zueinander senkrechter Bewegungsrichtungen möglich. Mittels ebenfalls einsetzbarer 3D-Festkörpergelenke kann schließlich auch eine Relativauslenkung von Messrahmen 6 und Schwenkeinheit 3 entlang dreier, zueinander orthogonaler Achsen vorgesehen werden; hierzu können mindestens zwei hintereinandergeschaltete Zwischenelemente dienen, wobei zumindest zwischen einem der beiden Zwischenelemente und der angrenzenden Komponente eine Relativbeweglichkeit entlang einer dritten Achse möglich ist.

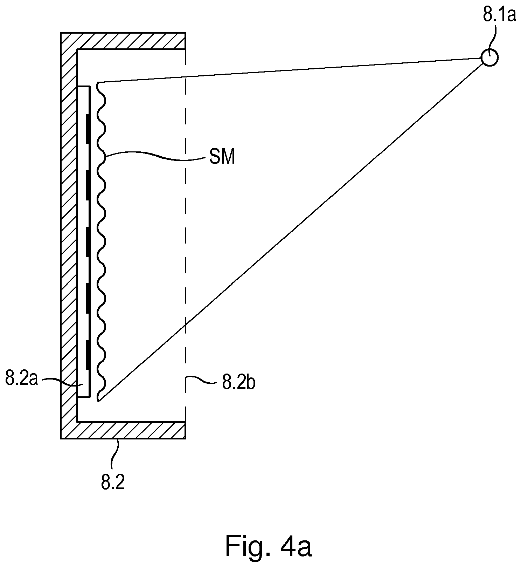

Als erstes Positionsmesssystem zur Bestimmung der räumlichen Position des Bearbeitungskopfes 2 in Bezug auf den Messrahmen 6 ist im dargestellten Ausführungsbeispiel ein optisches Positionsmesssystem vorgesehen. Dieses umfasst als maßgebliche Komponenten eine am Bearbeitungskopf 2 angeordnete Sendeeinheit 8.1 sowie eine am Messrahmen 6 angeordnete Empfangseinheit 8.2. Das optische Positionsmesssystem ist dabei als räumliches 2D-Winkelmesssystem ausgebildet, wie es z.B. aus der Druckschrift WO 01/38828 A1 bekannt ist, auf deren Offenbarungsgehalt hiermit ausdrücklich Bezug genommen wird. Das entsprechende 2D-Winkelmesssystem weist im vorliegenden Ausführungsbeispiel sendeseitig vier Lichtquellen 8.1a - 8.2d auf, die z.B. als LEDs ausgebildet sind und über eine - nicht dargestellte - Steuer- und Auswerteeinrichtung zeitlich selektiv aktivierbar sind; messtechnisch grundsätzlich erforderlich wären an dieser Stelle im übrigen lediglich mindestens drei Lichtquellen. Auf Seiten der Empfangseinheit 8.2 ist eine optoelektronische Detektoranordnung 8.2a mit einem vorgeordneten Abtastgitter 8.2b vorgesehen, wie dies aus der Darstellung der Figur 4a ersichtlich ist, die eine einzelne Lichtquelle 8.1a in Verbindung mit der Detektoranordnung 8.2 zeigt. Als Detektoranordnung 8.2a fungiert vorliegend ein sog. strukturierter Photodetektor, der eine Vielzahl periodisch angeordneter, lichtempfindlicher Detektorelemente aufweist. Mit Hilfe des strukturierten Photodetektors wird ein in der Detektionsebene resultierendes periodisches Streifenmuster SM detektiert, das aus der Wechselwirkung der von den Lichtquellen 8.1a - 8.1d emittierten Strahlenbündeln mit dem Abtastgitter 8.2b resultiert. Die Lage dieses Streifenmusters SM auf dem Photodetektor hängt hierbei von der Winkellage der jeweiligen Lichtquelle 8.1a - 8.1d relativ zur Detektoranordnung 8.2 ab. Im Hinblick auf weitere Details zum optischen Wirkungsprinzip des erstes Positionsmesssystems sei auf die vorstehend erwähnte WO 01/38828 A1 verwiesen.

Über das 2D-Winkelmesssystem des ersten Positionsmesssystems ist es somit möglich, über die Steuer- und Auswerteeinrichtung jeweils den Winkel zwischen einer Lichtquelle 8.1a - 8.1d der Sendeeinheit 8.1 und einer Normalen auf die Detektoranordnung 8.2 zu bestimmen. Zur Positionsbestimmung werden im Messbetrieb dann die einzelnen Lichtquellen 8.1a - 8.1d mit Hilfe der Steuer- und Auswerteeinrichtung sequentiell aktiviert und zu jeder Lichtquelle 8.1a - 8.1d der Richtungsvektor zwischen der Empfangseinheit 8.2 und der jeweiligen Lichtquelle 8.1a - 8.1d bestimmt. Da die Position bzw. die Anordnung der einzelnen Lichtquellen 8.1a - 8.1d zueinander bekannt ist, kann derart die Pose bzw. räumliche Lage bestimmt werden, in der sich die jeweiligen Lichtquellen 8.1a - 8.1d befinden. Aufgrund der Anordnung der Sendeeinheit 8.1 bzw. der Lichtquellen 8.1a - 8.1d am Bearbeitungskopf 2 ist auf diese Art und Weise die Bestimmung der räumlichen Position des Bearbeitungskopfes 2 und damit des Werkzeugs 2.1 in Bezug auf den Messrahmen 6 möglich.

Um die maßgebliche Position des Werkzeugs 2.1 im Bearbeitungskopf 2 möglichst präzise zu bestimmen, kann desweiteren noch vorgesehen sein, im Bearbeitungskopf 2 ein oder mehrere Positionssensoren 11 anzuordnen, über die die aktuelle räumliche Position des Werkzeugs 2.1 gegenüber dem Gehäuse des Bearbeitungskopfs 2 bestimmbar ist. Als hierzu geeignete Positionssensoren 11 können etwa kapazitive Abstandssensoren eingesetzt werden. Über diese kann dann die Position der Motorwelle, die das Werkzeug 2.1 antreibt, relativ zum Gehäuse des Bearbeitungskopfes 2 bestimmt werden, an dem wiederum die Komponenten des ersten Positionsmesssystems angeordnet sind, vorliegend also die Sendeeinheit 8.1 mit den zugehörigen Lichtquellen 8.1a - 8.1d.

Da die Messung mit Hilfe des ersten Positionsmesssystems im Arbeitsraum der Werkzeugmaschine stattfindet, erweist sich desweiteren als vorteilhaft, wenn die zwischen der Sendeeinheit 8.1 und der Empfangseinheit 8.2 propagierenden Strahlenbündel durch ein oder ggf. mehrere Abschirmelemente 9 abgeschirmt werden. Im vorliegenden Ausführungsbeispiel ist das nur schematisch angedeutete Abschirmelement 9 als lichtundurchlässiges Strahlrohr ausgebildet, das passiv mit dem Bearbeitungskopf 2 mitgeführt wird. Das Strahlrohr umgibt dabei vollständig die propagierenden Strahlenbündel zwischen Bearbeitungskopf 2 und Messrahmen 6 und verhindert, dass die Strahlenbündel durch dort vorhandene Kühlschmiermittel und Späne gestört werden. Alternativ zu einem derartigen Strahlrohr mit vollständiger Umkapselung der Strahlenbündel kann ggf. auch lediglich eine lichtundurchlässige Abschirmplatte oder dgl. als Abschirmelement vorgesehen werden, welches die propagierenden Strahlenbündel räumlich nur teilweise umgibt bzw. abschirmt.

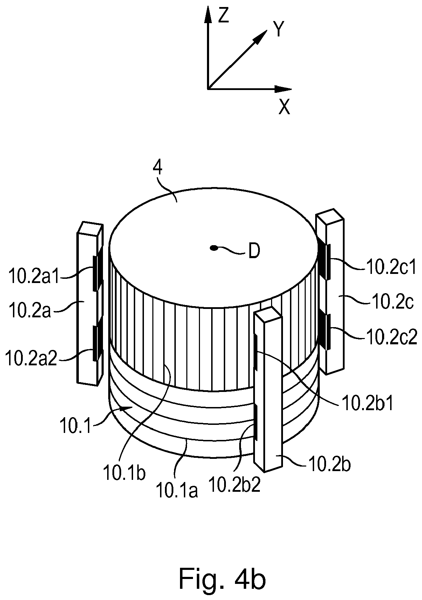

Zur Bestimmung der räumlichen Position des Werkstück-Positioniereinrichtung 4 und damit des Werkstücks 100 in Bezug auf den Messrahmen 6 dient wie oben erwähnt das zweite Positionsmesssystem. Dieses ist im vorliegenden Ausführungsbeispiel als optisches 6D-Winkelmessgerät ausgebildet und wird anhand der schematisierten Darstellung in Figur 4b nachfolgend beschrieben.

Zum zweiten Positionsmesssystem gehören als Komponenten einerseits eine trommelförmig ausgebildete Maßverkörperung 10.1, die an der um die Drehachse D rotierenden Werkstück-Positioniereinrichtung 4 angeordnet ist. Die Trommel-Längsachse fällt dabei mit der Drehachse D der Werkstück-Positioniereinrichtung 4 zusammen. Im konkreten Ausführungsbeispiel ist die Anordnung der Maßverkörperung 10.1 am Umfang des zylinderförmigen unteren Teil des Rundtisches vorgesehen, also unterhalb des Tisches 4.1, auf dem das Werkstück 100 aufgespannt wird. Die Maßverkörperung 10.1 ist als Auflicht-Maßverkörperung in Form eines Amplitudengitters ausgebildet und besteht aus alternierend angeordneten Teilungsbereichen unterschiedlicher Reflektivität. Auf Seiten der Maßverkörperung 10.1 sind hierbei in einem ersten Bereich 10.1a die Teilungsbereiche in axialer Richtung, d.h. entlang der angegebenen z-Richtung periodisch angeordnet; in einem zweiten Bereich 10.1b sind die Teilungsbereiche radialer Richtung, d.h. in Umfangsrichtung periodisch aufeinanderfolgend angeordnet. Grundsätzlich kann die abgetastete Maßverkörperung auch alternativ ausgebildet werden und alternierend angeordnete Teilungsbereiche mit unterschiedlichen optischen Eigenschaften aufweisen, z.B. als Phasengitter mit Teilungsbereichen, die eine unterschiedliche phasenschiebende Wirkung besitzen etc..

Als weitere Komponenten umfasst das zweite Positionsmesssystem vorliegend drei Abtasteinheiten 10.2a, 10.2b, 10.2c, die gegenüber der rotierenden Maßverkörperung 10.1 stationär am Messrahmen 6 angeordnet sind und zur optischen Abtastung der Maßverkörperung 10.1 dienen. Die drei Abtasteinheiten 10.2a, 10.2b, 10.2c sind über den Umfang um 120° zueinander versetzt angeordnet. Pro Abtasteinheit 10.2a, 10.2b, 10.2c sind aufgrund der vorstehend erläuterten Ausbildung der Maßverkörperung 10.1 dabei zwei Abtastköpfe 10.2a1 und 10.2a2 bzw. 10.2b1 und 10.2b2 sowie 10.2c1 und 10.2c2 vorgesehen, die jeweils zur Abtastung eines Bereichs 10.1a, 10.1b auf der Maßverkörperung 10.1 dienen. Insgesamt sind demzufolge vorliegend sechs Abtastköpfe 10.2a1, 10.2a2, 10.2b1, 10.2b1, 10.2c1, 10.2c2 vorgesehen.

Alternativ zum dargestellten Ausführungsbeispiel des zweiten Positionsmesssystems wären in einer Minimalkonfiguration mindestens drei Abtastköpfe erforderlich, die um den Trommelumfang verteilt am Messrahmen angeordnet sind, um die Maßverkörperung abzutasten.

Die einzelnen Abtastköpfe 10.2a1, 10.2a2, 10.2b1, 10.2b1, 10.2c1, 10.2c2 des dargestellten Ausführungsbeispiels umfassen neben einer Lichtquelle mindestens noch eine Detektoreinrichtung. Zur optischen Abtastung der Maßverkörperung 10.1 können dabei unterschiedlichste bekannte optische Abtastprinzipien genutzt werden, weshalb vorliegend nicht weiter darauf eingegangen sei. Die beiden, jeweils einer Abtasteinheit 10.2a, 10.2b, 10.2c zugeordneten Abtastköpfe 10.2a1 und 10.2a2, 10.2b1 und 10.2b2 bzw. 10.2c1 und 10.2c2 sind um 90° verdreht zueinander angeordnet, um jeweils den zugehörigen Bereich 10.1a, 10.1b der Maßverkörperung 10.1 abzutasten.

Mit Hilfe des derart ausgebildeten zweiten Positionsmesssystems kann die räumliche Position des Rundtisches bzw. der Werkstück-Positioniereinrichtung 4 und damit des darauf angeordneten Werkstücks 100 in allen sechs räumlichen Freiheitsgraden relativ zum Messrahmen 6 bestimmt werden.

Als vorteilhaft in Bezug auf die Relativanordnung des zweiten Positionsmesssystems bzw. dessen Komponenten und des Messrahmens 6 erweist sich ferner, wenn der thermische Nullpunkt des Messrahmens 6 im Mittelpunkt des messrahmenseitigen Komponenten des zweiten Positionsmesssystems zum Liegen kommt. Dies bedeutet vorliegend, dass der thermische Nullpunkt des Messrahmens 6 vorzugsweise auf der Drehachse D der Werkstück-Positioniereinrichtung 4 liegt. Als thermischer Nullpunkt sei hierbei derjenige Punkt des Messrahmens 6 verstanden, der auch bei thermischen Einflüssen räumlich invariant bleibt und sich nicht verlagert.

Neben den konkret beschriebenen Ausführungsbeispielen existieren im Rahmen der vorliegenden Erfindung selbstverständlich noch weitere Ausgestaltungsmöglich keiten.

So ist beispielsweise möglich, den Messrahmen alternativ zur oben erläuterten L-Form auszugestalten. Denkbar wäre dabei etwa eine an die Form der Schwenkeinheit angepasste U-Form des Messrahmens. Damit wäre eine symmetrische Integration des Messrahmens in die Schwenkeinheit möglich, die insbesondere eine gleichmäßigere Gewichtsverteilung in der Schwenkeinheit zur Folge hätte.

Es wäre desweiteren möglich, den Messrahmen beispielsweise nur thermisch oder aber nur mechanisch von der Schwenkeinheit zu entkoppeln, wenn in einer bestimmten Maschinenkonfiguration ggf. mechanische oder thermische Einflüsse nicht besonders gravierend sind.

Ebenso könnte der Messrahmen alternativ nicht in die Schwenkeinheit integriert, sondern darauf angeordnet werden.

Auch das erste Positionsmesssystem kann alternativ zur oben erläuterten Ausführungsform ausgebildet werden. So ist es auch möglich, umgekehrt zur vorstehend beschriebenen Variante die Sendeeinheit am Messrahmen und die Empfangseinheit am Bearbeitungskopf anzuordnen. Ebenfalls denkbar wäre es, sowohl die Sendeeinheit als auch Empfangseinheit am Messrahmen anzuordnen und am Bearbeitungskopf eine passive Reflektoreinheit zu platzieren oder umgekehrt. Die Reflektoreinheit wäre in einem solchen Fall dann jeweils so auszugestalten, dass darüber eine Rückreflexion der darauf von der Sendeeinheit einfallenden Strahlenbündel zurück in Richtung der Empfangseinheit erfolgt.

Ferner wäre es möglich, das erste Positionsmesssystem als nachgeführtes Interferometer auszubilden, dessen Sende- und Empfangseinheit am Messrahmen angeordnet sind, während am Bearbeitungskopf eine Reflektoreinheit angeordnet ist. Die Reflektoreinheit würde in diesem Fall dann mindestens einen Retroreflektor umfassen und die Sendeeinheit einen Nachführmechanismus für mindestens sechs Messstrahlenbündel aufweisen, mit dem diese dem Retroreflektor nachführbar sind. Der Nachführmechanismus könnte hierbei sowohl als aktiver Nachführmechanismus mit geeigneten Antrieben ausgebildet sein oder aber als passiver Nachführmechanismus mit einem Gestänge oder dgl..

Der Retroreflektor dient in einer Variante mit nachgeführtem Interferometer als Messreflektor, wobei das über das Interferometer der jeweilige Abstand zwischen dem Messreflektor und einem stationären Referenzreflektor messbar ist. Sowohl der Messreflektor als auch der Referenzreflektor könnten dabei vorzugsweise jeweils als Kugel ausgebildet werden und aus einem Material mit dem Brechungsindex n = 2 bestehen usw..

Desweiteren sind auch in Bezug auf das zweite Positionsmesssystem alternative Ausgestaltungsvarianten möglich. So könnte etwa anstelle der erläuterten optischen Abtastung im erläuterten 6D-Winkelmessgerät auch ein anderes Abtastprinzip zum Einsatz kommen, beispielsweise eine magnetische, induktive oder kapazitive Abtastung etc..

## Patentansprüche

1. Werkzeugmaschine mit
- einem stationären Maschinenrahmen (1),
- einem Bearbeitungskopf (2), der entlang dreier orthogonal zueinander orientierter Translationsachsen (x, y, z) relativ zum Maschinenrahmen (1) positionierbar ist und ein motorisch angetriebenes Werkzeug (2.1) umfasst sowie
- einer Schwenkeinheit (3), die um eine horizontale Schwenkachse (S) relativ zum Maschinenrahmen (1) schwenkbar ist und eine Werkstück-Positioniereinrichtung (4) umfasst, über die ein Werkstück (100) um eine senkrecht zur Schwenkachse (S) orientierte Drehachse (D) drehbar ist,
**dadurch gekennzeichnet,**
**dass** der Schwenkeinheit (3) ein Messrahmen (6) zugeordnet ist, der mit der Schwenkeinheit (3) verschwenkbar sowie thermisch und/oder mechanisch entkoppelt von der Schwenkeinheit (3) ausgebildet ist und an dem Komponenten eines ersten und zweiten Positionsmesssystems angeordnet sind,
- wobei am Bearbeitungskopf (2) weitere Komponenten des ersten Positionsmesssystems angeordnet sind und an der Werkstück-Positioniereinrichtung (4) weitere Komponenten des zweiten Positionsmesssystems angeordnet sind und
- wobei über das erste Positionsmesssystem eine Bestimmung der räumlichen Position des Bearbeitungskopfes (2) in Bezug auf den Messrahmen (6) erfolgt und
- wobei über das zweite Positionsmesssystem eine Bestimmung der räumlichen Position der Werkstück-Positioniereinrichtung (4) in Bezug auf den Messrahmen (6) erfolgt.

2. Werkzeugmaschine nach Anspruch 1, **dadurch gekennzeichnet, dass** der Messrahmen (6) über mehrere Flexelemente (7) verbunden in der Schwenkeinheit (3) integriert angeordnet ist.

3. Werkzeugmaschine nach Anspruch 1, **dadurch gekennzeichnet, dass** der Messrahmen (6) derart ausgebildet ist, dass sich die Pose der beiden Positionsmesssysteme zueinander während des Betriebs der Werkzeugmaschine nicht ändert.

4. Werkzeugmaschine nach mindestens einem der vorhergehenden Ansprüche, **dadurch gekennzeichnet, dass** mindestens ein Teil des Messrahmens (6) L-förmig ausgebildet ist, wobei sich ein erster Schenkel (6.1) des Messrahmens (6) parallel zur Schwenkachse (S) und ein zweiter Schenkel (6.2) des Messrahmens (6) parallel zur Drehachse (D) erstreckt.

5. Werkzeugmaschine nach mindestens einem der vorhergehenden Ansprüche, **dadurch gekennzeichnet, dass** der Messrahmen (6) derart ausgebildet ist, dass dessen thermischer Nullpunkt auf der Drehachse (D) der Werkstück-Positioniereinrichtung (4) liegt.

6. Werkzeugmaschine nach mindestens einem der vorhergehenden Ansprüche, **dadurch gekennzeichnet, dass** das zweite Positionsmesssystem als Komponenten eine trommelförmig ausgebildete Maßverkörperung (10.1) sowie mindestens drei Abtastköpfe (10.2a1, 10.2a2, 10.2b1, 10.2b1, 10.2c1, 10.2c2) zur Abtastung der Maßverkörperung (10.1) umfasst, wobei
- die Maßverkörperung (10.1) an der Werkstück-Positioniereinrichtung (4) angeordnet ist und die Trommel-Längsachse mit der Drehachse (D) der Werkstück-Positioniereinrichtung (4) zusammenfällt und wobei
- die Abtastköpfe (10.2a1, 10.2a2, 10.2b1, 10.2b1, 10.2c1, 10.2c2) um den Trommelumfang verteilt am Messrahmen (6) angeordnet sind.

7. Werkzeugmaschine nach Anspruch 6, **dadurch gekennzeichnet,**
- **dass** die Maßverkörperung (10.1) als Auflicht-Maßverkörperung ausgebildet ist, die in radialer und axialer Richtung jeweils alternierend ausgebildete Teilungsbereiche mit unterschiedlichen optischen Eigenschaften umfasst und
- **dass** die Abtastköpfe (10.2a1, 10.2a2, 10.2b1, 10.2b1, 10.2c1, 10.2c2) zur optischen Abtastung der Maßverkörperung (10.1) ausgebildet sind und jeweils mindestens eine Lichtquelle sowie eine Detektoreinrichtung umfassen.

8. Werkzeugmaschine nach mindestens einem der vorhergehenden Ansprüche, **dadurch gekennzeichnet, dass** das erste Positionsmesssystem als Komponenten mindestens eine optische Sendeeinheit (8.1) und eine optische Empfangseinheit (8.2) umfasst, wobei entweder
- die Sendeeinheit (8.1) am Bearbeitungskopf (2) und die Empfangseinheit (8.3) am Messrahmen (6) angeordnet ist oder
- die Sendeeinheit (8.1) am Messrahmen (6) und die Empfangseinheit (8.2) am Bearbeitungskopf (2) angeordnet ist oder
- die Sendeeinheit und die Empfangseinheit am Messrahmen angeordnet sind und am Bearbeitungskopf eine Reflektoreinheit angeordnet ist oder
- die Sendeeinheit und die Empfangseinheit am Bearbeitungskopf angeordnet sind und am Messrahmen eine Reflektoreinheit angeordnet ist.

9. Werkzeugmaschine nach Anspruch 8, **dadurch gekennzeichnet, dass** zwischen dem Bearbeitungskopf (2) und dem Messrahmen (6) Abschirmelemente (9) angeordnet sind, die zwischen Bearbeitungskopf (2) und Messrahmen (6) propagierende Strahlenbündel des ersten Positionsmesssystems abschirmen.

10. Werkzeugmaschine nach Anspruch 8, **dadurch gekennzeichnet, dass** der Bearbeitungskopf (2) mindestens einen Positionssensor (11) aufweist, über den die Position einer Motorwelle, die das Werkzeug (2.1) antreibt, relativ zu einem Gehäuse des Bearbeitungskopfes (2) bestimmbar ist, an dem die Komponenten des ersten Positionsmesssystems angeordnet sind.

11. Werkzeugmaschine nach Anspruch 8, **dadurch gekennzeichnet, dass** die Sendeeinheit (8.1) mindestens drei Lichtquellen (8.1a, 8.1b, 8.1c, 8.1d) umfasst, die in fester Relativanordnung zueinander angeordnet und über eine Steuer- und Auswerteeinrichtung zeitlich selektiv aktivierbar sind.

12. Werkzeugmaschine nach Anspruch 11, **dadurch gekennzeichnet, dass** die Empfangseinheit (8.2) mindestens eine optoelektronische Detektoranordnung (8.2a) sowie mindestens ein der Detektoranordnung (8.2a) vorgeordnetes Abtastgitter (8.2b) umfasst.

13. Werkzeugmaschine nach Anspruch 12, **dadurch gekennzeichnet, dass** die Steuer- und Auswerteeinrichtung dazu eingerichtet und ausgebildet ist, aus der Lage eines auf der Detektoranordnung (8.2a) resultierenden Streifenmusters (SM) die Winkellage der aktivierten Lichtquelle (8.1a, 8.1b, 8.1c, 8.1d) relativ zur Detektoranordnung (8.2a) zu bestimmen, so dass nach der sequentiellen Aktivierung der mindestens drei Lichtquellen (8.1a, 8.1b, 8.1c, 8.1d) die räumliche Position des Werkzeugs (2.1) bestimmbar ist.

14. Werkzeugmaschine nach Anspruch 8, **dadurch gekennzeichnet, dass** das erste Positionsmesssystem als aktiv oder passiv nachgeführtes Interferometer ausgebildet ist, dessen Sende- und Empfangseinheit am Messrahmen (6) angeordnet sind, während am Bearbeitungskopf (2) eine Reflektoreinheit angeordnet ist, wobei
- die Reflektoreinheit mindestens einen Retroreflektor umfasst und wobei
- die Sendeeinheit einen Nachführmechanismus für mindestens sechs Messstrahlenbündel umfasst, mit dem diese dem Retroreflektor nachführbar sind.

15. Werkzeugmaschine nach Anspruch 14, **dadurch gekennzeichnet, dass** der Retroreflektor als Messreflektor fungiert und über das nachgeführte Interferometer ein Abstand zwischen dem Messreflektor und einem stationären Referenzreflektor messbar ist, wobei der Messreflektor und der Referenzreflektor jeweils als Kugel ausgebildet sind.

## Claims

1. Machine tool comprising
- a stationary machine frame (1),
- a machining head (2), which can be positioned relative to the machine frame (1) along three translation axes (x, y, z) oriented orthogonally in relation to one another and comprises a motor-driven tool (2.1), and
- a pivot unit (3), which is pivotable about a horizontal pivot axis (S) relative to the machine frame (1) and comprises a workpiece positioning unit (4), via which a workpiece (100) is rotatable about a rotational axis (D) oriented perpendicularly to the pivot axis (S),
**characterized in that**
a measuring frame (6) is associated with the pivot unit (3), which is designed as pivotable with the pivot unit (3) and thermally and/or mechanically decoupled from the pivot unit (3) and on which components of a first and second position measuring system are arranged,
- wherein further components of the first position measuring system are arranged on the machining head (2) and further components of the second position measuring system are arranged on the workpiece positioning unit (4) and
- wherein a determination of the spatial position of the machining head (2) in relation to the measuring frame (6) takes place via the first position measuring system and
- wherein a determination of the spatial position of the workpiece positioning unit (4) in relation to the measuring frame (6) takes place via the second position measuring system.

2. Machine tool according to Claim 1, **characterized in that** the measuring frame (6) is arranged integrated, connected via multiple flexible elements (7), in the pivot unit (3).

3. Machine tool according to Claim 1, **characterized in that** the measuring frame (6) is designed such that the pose of the two position measuring systems in relation to one another does not change during the operation of the machine tool.

4. Machine tool according to at least one of the preceding claims, **characterized in that** at least a part of the measuring frame (6) is L-shaped, wherein a first leg (6.1) of the measuring frame (6) extends parallel to the pivot axis (S) and a second leg (6.2) of the measuring frame (6) extends parallel to the rotational axis (D).

5. Machine tool according to at least one of the preceding claims, **characterized in that** the measuring frame (6) is designed such that its thermal zero point lies on the rotational axis (D) of the workpiece positioning unit (4).

6. Machine tool according to at least one of the preceding claims, **characterized in that** the second position measuring system comprises as components a drum-shaped measuring standard (10.1) and at least three scanning heads (10.2a1, 10.2a2, 10.2bl, 10.2b1, 10.2c1, 10.2c2) for scanning the measuring standard (10.1), wherein
- the measuring standard (10.1) is arranged on the workpiece positioning unit (4) and the drum longitudinal axis is coincident with the rotational axis (D) of the workpiece positioning unit (4) and wherein
- the scanning heads (10.2a1, 10.2a2, 10.2b1, 10.2b1, 10.2c1, 10.2c2) are arranged distributed around the drum circumference on the measuring frame (6).

7. Machine tool according to Claim 6, **characterized in that**
- the measuring standard (10.1) is designed as an incident light measuring standard, which comprises pitch regions having different optical properties each formed alternately in the radial and axial directions and
- the scanning heads (10.2a1, 10.2a2, 10.2bl, 10.2b1, 10.2c1, 10.2c2) are designed for optical scanning of the measuring standard (10.1) and each comprise at least one light source and a detector unit.

8. Machine tool according to at least one of the preceding claims, **characterized in that** the first position measuring system comprises as components at least one optical transmitter unit (8.1) and one optical receiver unit (8.2), wherein either
- the transmitter unit (8.1) is arranged on the machining head (2) and the receiver unit (8.3) is arranged on the measuring frame (6) or
- the transmitter unit (8.1) is arranged on the measuring frame (6) and the receiver unit (8.2) is arranged on the machining head (2) or
- the transmitter unit and the receiver unit are arranged on the measuring frame and a reflector unit is arranged on the machining head or
- the transmitter unit and the receiver unit are arranged on the machining head and a reflector unit is arranged on the measuring frame.

9. Machine tool according to Claim 8, **characterized in that** shielding elements (9), which shield beams of the first position measuring system propagating between machining head (2) and measuring frame (6), are arranged between the machining head (2) and the measuring frame (6).

10. Machine tool according to Claim 8, **characterized in that** the machining head (2) has at least one position sensor (11), via which the position of a motor shaft, which drives the tool (2.1), is determinable relative to a housing of the machining head (2), on which the components of the first position measuring system are arranged.

11. Machine tool according to Claim 8, **characterized in that** the transmitter unit (8.1) comprises at least three light sources (8.1a, 8.1b, 8.1c, 8.1d), which are arranged in a fixed relative arrangement to one another and are activatable in a chronologically-selective manner via a control and analysis unit.

12. Machine tool according to Claim 11, **characterized in that** the receiver unit (8.2) comprises at least one optoelectronic detector arrangement (8.2a) and at least one scanning grating (8.2b) arranged upstream of the detector arrangement (8.2a).

13. Machine tool according to Claim 12, **characterized in that** the control and analysis unit is configured and designed for the purpose of determining the angular position of the activated light source (8.1a, 8.1b, 8.1c, 8.1d) relative to the detector arrangement (8.2a) from the position of a strip pattern (SM) resulting on the detector arrangement (8.2a), so that the spatial position of the tool (2.1) is determinable after the sequential activation of the at least three light sources (8.1a, 8.1b, 8.1c, 8.1d).

14. Machine tool according to Claim 8, **characterized in that** the first position measuring system is designed as an actively or passively tracked interferometer, the transmitter and receiver units of which are arranged on the measuring frame (6), while a reflector unit is arranged on the machining head (2), wherein
- the reflector unit comprises at least one retroreflector and wherein
- the transmitter unit comprises a tracking mechanism for at least six measuring beams, using which they can be tracked to the retroreflector.

15. Machine tool according to Claim 14, **characterized in that** the retroreflector functions as a measuring selector and a distance between the measuring reflector and a stationary reference reflector is measurable via the tracked interferometer, wherein the measuring reflector and the reference reflector are each designed as spheres.

## Revendications

1. Machine-outil comportant
- un châssis de machine fixe (1),
- une tête de traitement (2) qui peut être positionnée par rapport au châssis de machine (1) suivant trois axes de translation (x, y, z) orientés perpendiculairement les uns aux autres et qui comprend un outil entraîné par moteur (2.1), et
- une unité pivotante (3) qui peut pivoter autour d'un axe de pivotement horizontal (S) par rapport au châssis de machine (1) et qui comprend un dispositif de positionnement de pièce à usiner (4) au moyen duquel une pièce à usiner (100) peut pivoter autour d'un axe de rotation (D) orienté perpendiculairement à l'axe de pivotement (S),
**caractérisé en ce que** l'unité pivotante (3) est associée à un châssis de mesure (6) qui peut pivoter avec l'unité pivotante (3) et qui est découplé thermiquement et/ou mécaniquement de l'unité pivotante (3) et sur lequel sont disposés des composants d'un premier et d'un deuxième système de mesure de position,
- dans laquelle d'autres composants du premier système de mesure de position sont disposés sur la tête de traitement (2) et d'autres composants du deuxième système de mesure de position sont disposés sur le dispositif de positionnement de pièce à usiner (4), et
- dans laquelle une détermination de la position spatiale de la tête de traitement (2) par rapport au châssis de mesure (6) est effectuée au moyen du premier système de mesure de position, et
- dans laquelle une détermination de la position spatiale du dispositif de positionnement de pièce à usiner (4) par rapport au châssis de mesure (6) est effectuée par le deuxième système de mesure de position.

2. Machine-outil selon la revendication 1, **caractérisée en ce que** le châssis de mesure (6) est disposé de manière intégrée à l'unité pivotante (3) et y est relié par l'intermédiaire de plusieurs éléments flexibles (7).

3. Machine-outil selon la revendication 1, **caractérisée en ce que** le châssis de mesure (6) est conçu de telle sorte que la disposition des deux systèmes de mesure de position l'un par rapport à l'autre ne varie pas pendant le fonctionnement de la machine-outil.

4. Machine-outil selon au moins une des revendications précédentes, **caractérisée en ce qu'**au moins une partie du châssis de mesure (6) est en forme de L, dans laquelle une première branche (6.1) du châssis de mesure (6) s'étend parallèlement à l'axe de pivotement (S) et une deuxième branche (6.2) du châssis de mesure (6) s'étend parallèlement à l'axe de rotation (D).

5. Machine-outil selon au moins l'une des revendications précédentes, **caractérisée en ce que** le châssis de mesure (6) est conçu de telle sorte que son point zéro'thermique se situe sur l'axe de rotation (D) du dispositif de positionnement de pièce à usiner (4).

6. Machine-outil selon au moins l'une des revendications précédentes, **caractérisée, en ce que** le deuxième système de mesure de position comprend, en tant que composants, un étalon de mesure (10.1) réalisé sous la forme d'un tambour et au moins trois têtes de balayage (10.2a1, 10.2a2, 10.2b1, 10.2b1, 10.2c1, 10.2c2) destinées à balayer l'étalon de mesure (10.1), dans laquelle
- l'étalon de mesure (10.1) est disposé sur le dispositif de positionnement de pièce à usiner (4) et l'axe longitudinal du tambour coïncide avec l'axe de rotation (D) du dispositif de positionnement de pièce à usiner (4) et dans laquelle
- les têtes de balayage (10.2a1, 10.2a2, 10.2b1, 10.2b1, 10.2c1, 10.2c2) sont disposées sur le châssis de mesure (6) de manière répartie autour de la circonférence du tambour.

7. Machine-outil selon la revendication 6, **caractérisée en ce que**
- l'étalon de mesure (10.1) est réalisé sous la forme d'un étalon de mesure de lumière réfléchie, qui comprend des zones de graduation ayant des propriétés optiques différentes, qui sont respectivement formées de manière alternée dans les directions radiale et axiale et
- **en ce que** les têtes de balayage (10.2a1, 10.2a2, 10.2b1, 10.2b1, 10.2c1, 10.2c2) sont réalisées de manière à balayer optiquement l'étalon de mesure (10.1) et comprennent respectivement au moins une source lumineuse et un dispositif détecteur.

8. Machine-outil selon au moins l'une des revendications précédentes, **caractérisée en ce que** le premier système de mesure de position comprend, en tant que composants, au moins une unité d'émission optique (8.1) et une unité de réception optique (8.2), dans laquelle
- soit l'unité d'émission (8.1) est disposée sur la tête de traitement (2) et l'unité de réception (8.3) est disposée sur le châssis de mesure (6),
- soit l'unité d'émission (8.1) est disposée sur le châssis de mesure (6) et l'unité de réception (8.2) est disposée sur la tête de traitement (2),
- soit l'unité d'émission et l'unité de réception sont disposées sur le châssis de mesure et une unité réfléchissante est disposée sur la tête de traitement,
- soit l'unité d'émission et l'unité de réception sont disposées sur la tête de traitement et une unité réfléchissante est disposée sur le châssis de mesure.

9. Machine-outil selon la revendication 8, **caractérisée en ce que** des éléments de protection (9) sont disposés entre la tête de traitement (2) et le châssis de mesure (6), lesquels protègent les faisceaux de rayonnement du premier système de mesure de position qui se propagent entre la tête de traitement (2) et le châssis de mesure (6).

10. Machine-outil selon la revendication 8, **caractérisée en ce que** la tête de traitement (2) comporte au moins un capteur de position (11) au moyen duquel la position d'un arbre moteur entraînant l'outil (2.1) peut être déterminée par rapport à un logement de la tête de traitement (2), sur lequel sont disposés les composants du premier système de mesure de position.

11. Machine-outil selon la revendication 8, **caractérisée en ce que** l'unité d'émission (8.1) comprend au moins trois sources lumineuses (8.1a, 8.1b, 8.1c, 8.1d) qui sont disposées les unes par rapport aux autres dans un agencement relatif fixe et qui peuvent être activées sélectivement dans le temps au moyen d'un dispositif de commande et d'évaluation.

12. Machine-outil selon la revendication 11, **caractérisée en ce que** l'unité de réception (8.2) comprend au moins un système détecteur optoélectronique (8.2a) et au moins un réseau de balayage (8.2b) disposé en amont du système détecteur (8.2a).

13. Machine-outil selon la revendication 12, **caractérisée en ce que** le dispositif de commande et d'évaluation est conçu et réalisé de manière à déterminer la position angulaire de la source lumineuse activée (8.1a, 8.1b, 8.1c, 8.1d) par rapport au système détecteur (8.2a) à partir de la position d'un motif en bandes (SM) résultant sur le système détecteur (8.2a), de telle sorte qu'après l'activation séquentielle desdites au moins trois sources lumineuses (8.1a, 8.1b, 8.1c, 8.1d), la position spatiale de la machine-outil (2.1) puisse être déterminée.

14. Machine-outil selon la revendication 8, **caractérisée en ce que** le premier système de mesure de position est réalisé sous la forme d'un interféromètre à poursuite active ou passive dont les unités d'émission et de réception sont disposées sur le châssis de mesure (6), tandis qu'une unité réfléchissante est disposée sur la tête de traitement (2), dans laquelle
- l'unité réfléchissante comprend au moins un rétroréflecteur, et dans laquelle
- l'unité d'émission comprend un mécanisme de poursuite pour au moins six faisceaux de mesure, au moyen duquel ces derniers peuvent être orientés vers le rétroréflecteur.

15. Machine-outil selon la revendication 14, **caractérisée en ce que** le rétroréflecteur fonctionne en tant que réflecteur de mesure et **en ce qu'**une distance entre le réflecteur de mesure et un réflecteur de référence stationnaire peut être mesurée par l'interféromètre poursuivi, dans laquelle le réflecteur de mesure et le réflecteur de référence sont respectivement réalisés sous la forme d'une bille.
